# EUROPÄISCHE PATENTSCHRIFT

(11) **EP 0 815 149 B1**
(45) Veröffentlichungstag und Bekanntmachung des Hinweises auf die Patenterteilung: **14.07.1999**
(21) Anmeldenummer: 96906734.7
(22) Anmeldetag: 04.03.1996
(51) Int. Cl.: C08F 210/14, C08F 222/00, C08F 255/02, C09D 17/00, C14C 9/00

(54) **COPOLYMER AUS DICARBONSÄUREVERBINDUNG UND VERZWEIGTKETTIGEN OLIGOMEREN**
AQUEOUS SOLUTIONS OR DISPERSIONS OF COPOLYMERS OF MONOETHYLENICALLY UNSATURATED DICARBOXYLIC ACIDS OR THEIR ANHYDRIDES AND OF BRANCHED CHAIN OLIGOMERS OR POLYMERS
SOLUTIONS OU DISPERSIONS AQUEUSES DE COPOLYMERES D'ACIDES DICARBOXYLIQUES MONOETHYLENIQUEMENT INSATURES OU DE LEURS ANHYDRIDES ET D'OLIGOMERES OU POLYMERES A CHAINE RAMIFIEE

(30) Priorität: 13.03.1995 DE 19508655
(43) Veröffentlichungstag der Anmeldung: 07.01.1998
(73) Patentinhaber: BASF AKTIENGESELLSCHAFT, 67056 Ludwigshafen (DE)
(72) Erfinder: DANISCH, Peter, D-67065 Ludwigshafen (DE); DIX, Johannes, Peter, D-67273 Weisenheim (DE); DENZINGER, Walter, D-67346 Speyer (DE); KISTENMACHER, Axel, D-67061 Ludwigshafen (DE); KNEIP, Michael, D-67069 Ludwigshafen (DE); MÜLLER, Hans-Joachim, D-67269 Grünstadt (DE); RÖSCH, Joachim Dr., D-67063 Ludwigshafen (DE); SCHORNICK, Gunnar, D-67271 Neuleiningen (DE)
(86) Internationale Anmeldenummer: EP9600900
(87) Internationale Veröffentlichungsnummer: WO9628483

(56) Entgegenhaltungen:
- EP-A- 0 682 044
- WO-A-90/03359
- DE-A- 4 330 971
- RO-A- 54 317

## Beschreibung

Die vorliegende Erfindung betrifft wäßrige Lösungen oder Dispersionen von Copolymerisaten aus monoethylenisch ungesättigten Dicarbonsäuren oder deren Anhydriden und verzweigtkettigen Oligomeren oder Polymeren sowie die Verwendung dieser Lösungen bzw. Dispersionen als Lederhilfsmittel und Dispergiermittel für Pigmente. Da ein Teil der beschriebenen Copolymerisate neue Stoffe darstellt, betrifft die Erfindung weiterhin diese Copolymerisate.

Aus der DE-PS 26 29 748 (1) ist die Verwendung von mit Alkalimetallbasen oder Aminen verseiften Copolymerisaten aus linearen C₁₀- bis C₃₀-Olefinen und Maleinsäureanhydrid zum Füllen und Fetten von Leder und Pelzfellen bekannt. Die hydrolysierten Copolymerisate können noch mit Alkalibisulfit umgesetzt werden. Da die Copolymerisate in organischen Lösungsmitteln hergestellt und die Lösungsmittel nicht entfernt werden, enthalten die daraus hergestellten wäßrigen Copolymerisatdispersionen beträchtliche Mengen organischer Lösungsmittel, beispielsweise Xylol oder Dodecylbenzol. Solche Dispersionen werden zwar zum Fetten von Leder und Pelzfellen empfohlen, sie sind jedoch aufgrund ihres Gehalts an organischen Lösungsmitteln für die Lederherstellung praktisch nicht brauchbar.

Aus der EP-A 412 389 (2) ist die Verwendung von wäßrigen Lösungen oder Dispersionen von partiell neutralisierten Copolymerisaten von Maleinsäureanhydrid mit C₈- bis C₄₀-Olefinen zum Hydrophobieren von Ledern und Pelzfellen bekannt. Als Olefinkomponenten werden beispielsweise Octen-1, Diisobuten, Decen-1, Dodecen-1, Tetradecen-1, Hexadecen-1 und Cycloocten genannt.

Aus der EP-A 486 608 (3) ist die Verwendung von Copolymerisaten auf Basis von langkettigen Alkylvinylethern und ethylenisch ungesättigten Dicarbonsäureanhydriden zum Hydrophobieren von Leder und Pelzfellen bekannt.

Aus der EP-A 579 267 (4) sind Dispersionen von wasserunlöslichen amphiphilen Copolymerisaten, beispielsweise auf der Basis von primären Alkenen und Maleinsäureanhydrid, bekannt, die zur Behandlung von gegerbtem Leder eingesetzt werden können.

Die nach dem Stande der Technik bekannten polymeren Hilfsstoffe zur Hydrophobausrüstung und auch zur Fettung und Nachgerbung von Leder zeigen in der praktischen Anwendung oftmals den gravierenden Nachteil, daß diese nur in die oberflächennahen Schichten des Leders eindringen. Die ungenügende Penetration dieser polymeren Hilfsstoffe durch den Lederquerschnitt hat zur Folge, daß die damit hergestellten Leder häufig Mängel im Hinblick auf die erzielbare Fülle, Weichheit, Farbtiefe und Hydrophobierung aufweisen. So kann beispielsweise an Schnittkanten, Nähten, Rissen und an mechanisch verursachten Oberflächenbeschädigungen Wasser weitgehend ungehindert eindringen.

Der vorliegenden Erfindung lage daher die Aufgabe zugrunde, geeignete Mittel auf Polymerbasis zur Verfügung zu stellen, die eine gute Penetration durch den Lederquerschnitt ermöglichen.

Demgemäß wurden wäßrige Lösungen oder wäßrige Dispersionen von Copolymerisaten gefunden, welche durch Copolymerisation von
(a) 20 bis 95 mol-% mindestens einer monoethylenisch ungesättigten C₄- bis C₁₂-Dicarbonsäure oder deren Anhydrid mit
(b) 5 bis 80 mol-% mindestens eines verzweigtkettigen Oligomeren oder Polymeren mit einer Vinyl-, Vinyliden- oder Alkylvinylen-Endgruppe, welches aus mindestens 9 C-Atomen besteht, und
(c) 0 bis 50 mol-% mindestens einer weiteren monoethylenisch ungesättigten Verbindung, die mit den Monomeren (a) und (b) copolymerisierbar ist,
erhältlich sind.

Die genannten Copolymerisate werden als wäßrige Lösungen oder wäßrige Dispersionen mit einem Gehalt an diesen Copolymerisaten in unbehandelter oder in solvolysierter und/oder neutralisierter Form (Feststoffgehalt) von üblicherweise 0,5 bis 70 Gew.-%, insbesondere 1 bis 60 Gew.-%, vor allem 3 bis 35 Gew.-%, bezogen auf die Gesamtmenge der Lösungen bzw. Dispersionen, eingesetzt.

Die den erfindungsgemäße wäßrigen Lösungen bzw. wäßrigen Dispersionen zugrunde liegenden Copolymerisate sind im Prinzip teilweise bekannt, beispielsweise aus WO-A 90/03359 (5) und der deutschen Patentanmeldung P 43 30 971.2 (6), dort werden die Copolymerisate jedoch in öllöslicher Form als Kraftstoff- und Schmierstoffadditive empfohlen.

Die im Copolymerisat vorhandenen Anhydridgruppen können partiell oder vollständig mit hydroxyfunktionellen Verbindungen oder Aminen solvolysiert werden. Die unbehandelten oder mit Alkoholen oder Aminen solvolysierten, d.h. veresterten, amidierten oder imidierten Polymerisate werden in der Regel anschließend im wäßrigen Medium an den vorhandenen oder bei der Solvolyse entstandenen Carboxylgruppen zumindest einer partiellen Neutralisation unterzogen. Die erhaltene Lösung oder Dispersion kann vornehmlich als Nachgerbstoff, Fettungsmittel oder als Hydrophobiermittel für Leder verwendet werden.

Die wäßrigen Lösungen oder Dispersionen können auch mit Anteilen bis zu 40 %, bezogen auf den Anteil an Copolymerisat, mit Emulgatoren oder Schutzkolloiden hergestellt oder im Anschluß an ihre Herstellung versetzt werden. Hierdurch lassen sich hervorragende Fettungs- und Nachgerbeigenschaften für Leder bei gleichzeitiger sehr guter Penetration erzielen.

Als Monomere (a) kommen monoethylenisch ungesättigte Dicarbonsäuren und deren Anhydride mit 4 bis 12, insbesondere 4 bis 6 Kohlenstoffatomen in Frage, vor allem Maleinsäure, Itaconsäure, Citraconsäure, Mesaconsäure, Fumarsäure, Maleinsäureanhydrid, Itaconsäureanhydrid, Citraconsäureanhydrid, Methylenmalonsäureanhydrid, 1,2,3,6-Tetrahydrophthalsäureanhydrid, 3,6-Epoxy-1,2,3,6-tetrahydrophthalsäureanhydrid, 5-Norbornen-2,3-dicarbonsäureanhydrid, Bicyclo[2.2.2]-5-octen-2,3-dicarbonsäureanhydrid, 3-Methyl-1,2,6-tetrahydrophthalsäureanhydrid oder 2-Methyl-1,3,6-tetrahydrophthalsäureanhydrid und deren Mischungen untereinander. Bevorzugt ist Maleinsäureanhydrid.

Als Monomer (b) kommen verzweigtkettige Oligomere oder Polymere mit 9 bis normalerweise 350, vorzugsweise 10 bis 140, insbesondere 11 bis 70, vor allem 12 bis 30 Kohlenstoffatomen in Betracht, die durch Oligomerisation oder Polymerisation von linearen oder verzweigten Olefinen oder Olefinmischungen hergestellt werden und eine copolymerisierbare Endgruppe in Form einer Vinyl-, Vinyliden- oder Alkylvinylengruppe enthalten. Diese Endgruppen können durch folgende allgemeine Formeln charakterisiert werden:

Polymerkette-CH=CH₂ Vinyl

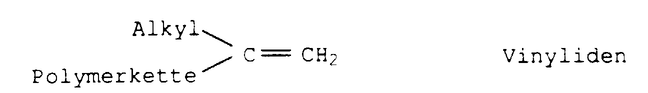

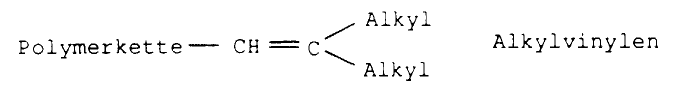

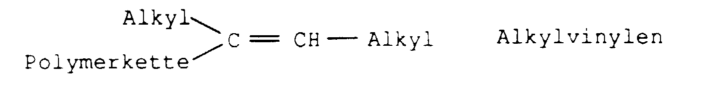

"Verzweigtkettig" bedeutet, daß die Oligomer- bzw. Polymerkette in mehr oder weniger regelmäßigen Abständen Alkylseitenketten, insbesondere C₁- bis C₄₀-Alkylseitenketten, vor allem C₁- bis C₂₄-Alkylseitenketten, ganz besonders bevorzugt Methyl- und C₅- bis C₁₆-Alkylseitenketten trägt. Dabei kommen in der Regel auf 10 C-Atome in der Hauptkette 0,3 bis 8, insbesondere 0,7 bis 6, vor allem 1 bis 5 Alkylseitenketten, wobei ein C-Atom in der Hauptkette eine oder zwei Alkylseitenketten tragen kann.

Als lineare bzw. verzweigte Olefine bzw. Olefinmischungen zur Herstellung der Monomeren (b) kommen beispielsweise in Betracht: Propen, Buten-1, Isobuten, Hexen-1, 2,4,4-Trimethylpenten-1, 2,4,4-Trimethylpenten-2, C₈- bis C₁₀-α-Olefin, Dedecen-1, C₁₂- bis C₁₄-α-Olefin, 1-Tetradecen, 1-Hexadecen, 1-Octadecen, C₂₀-α-Olefin, C₂₂-α-Olefin, C₂₄-α-Olefin, die Mischung aus C₂₀- bis C₂₄-α-Olefin, C₂₄- bis C₂₈-α-Olefin, C₃₀-α-Olefin oder C₄₀-α-Olefin. Weiterhin können auch Mischungen mit Ethen als Mischungskomponente, wie z.B. eine Ethen/Buten-Mischung oder eine Ethen/Hexen-Mischung, eingesetzt werden. Es können auch funktionalisierte Olefine, die beispielsweise Aminogruppen, Hydroxylgruppen, Carboxylgruppen, Estergruppen, Arylreste, weitere C-C-Doppelbindungen oder cyclische gesättigte oder ungesättigte Alkylreste tragen, allein oder in Mischung zur Herstellung der verzweigtkettigen Oligomere oder Polymere (b) eingesetzt werden.

Beispiele für verzweigtkettige Oligomere bzw. Polymere (b) sind Oligopropen, Oligohexen, Oligo(Hexen/Ethen), Oligooctadecen und Polyisobuten, beispielsweise Polyisobuten mit einem zahlenmittleren Molekulargewicht von 1.000, 1.300 oder 2.300.

Die verzweigtkettigen Oligomere oder Polymere (b) lassen sich in der Regel aus den genannten Ausgangsolefinen durch übliche Polymerisationsmethoden unter Verwendung von Metallkomplexen, z.B. Metallocen-Komplexen, als Katalysatoren oder mittels bekannter kationischer Polymerisationstechniken herstellen.

Als Monomer (c) kommen alle solche Monomere in Betracht, die mit den Monomeren (a) und (b) copolymerisierbar sind.

Beispielsweise sind dies lineare 1-Olefine (α-Olefine) mit 2 bis 40 Kohlenstoffatomen, bevorzugt mit 8 bis 30 Kohlenstoffatomen, wie Decen, Dodecen, Octadecen und technische Mischungen aus C₂₀- bis C₂₄-Olefinen und C₂₄- bis C₂₈-Olefinen. Weiterhin kommen auch funktionalisierte 1-Olefine in Betracht, wie z.B. 10-Undecensäure.

Als Monomere (c) kommen ebenso monoethylenisch ungesättigte C₃- bis C₁₀-Monocarbonsäuren in Frage, wie Acrylsäure, Methacrylsäure, Dimethylacrylsäure, Ethylacrylsäure, Crotonsäure, Allylessigsäure und Vinylessigsäure, von denen Acrylsäure und Methacrylsäure hierbei bevorzugt sind.

Weiterhin kommen als Monomere (c) Vinyl- und Allylalkylether mit 1 bis 40 Kohlenstoffatomen im Alkylrest in Betracht, wobei der Alkylrest noch weitere Substituenten wie eine Hydroxylgruppe, eine Amino- oder Dialkylaminogruppe oder eine bzw. mehrere Alkoxylatgruppen tragen kann. Beispielsweise seien Methylvinylether, Ethylvinylether, Propylvinylether, Isobutylvinylether, 2-Ethylhexylvinylether, Decylvinylether, Dodecylvinylether, Octadecylvinylether, 2-(Diethylamino)ethylvinylether, 2-(Di-n-butylamino)ethylvinylether, Methyldiglykolvinylether sowie die entsprechenden Allylether genannt.

Eine weitere Gruppe von Monomeren (c) sind C₁ bis C₄₀-Alkylester, Hydroxyalkylester, Alkoxyalkylester, Amide und C₁- bis C₄₀-N-Alkylamide von monoethylenisch ungesättigten C₃- bis C₁₀-Mono- oder Dicarbonsäuren, wie Ethylacrylat, Butylacrylat, 2-Ethylhexylacrylat, Decylacrylat, Dodecylacrylat, Octadecylacrylat sowie die Ester von technischen Alkoholgemischen mit 14 bis 28 Kohlenstoffatomen, Ethylmethacrylat, Phenoxyethylacrylat, Methyldiglykolacrylat, 2-Ethylhexylmethacrylat, Decylmethacrylat, Octadecylmethacrylat, Maleinsäuremonobutylester, Maleinsäuredibutylester, Maleinsäuremonodecylester, Maleinsäuredidodecylester, Maleinsäuremonooctadecylester, Maleinsäuredioctadecylester, Hydroxyethylacrylat, Hydroxypropylacrylat, Butandiol-1,4-monoacrylat, Dimethylaminoethylacrylat, Diethylaminoethylacrylat, Dibutylaminoethylmethacrylat, Acrylamid, Methacrylamid, N-tert.-Butylacrylamid, N-Octylacrylamid, N,N'-Dibutylacrylamid, N-Dodecylmethacrylamid, N-Octadecylmethacrylamid und Dimethylaminopropylmethacrylamid.

Weiterhin können als Monomere (c) Vinyl- und Allylester von C₁- bis C₃₀-Monocarbonsäuren mit den Monomeren (a) und (b) copolymerisiert werden. Im einzelnen handelt es sich dabei z.B. um Vinylformiat, Vinylacetat, Vinylpropionat, Vinylbutyrat, Vinyllaurat, Vinylstearat, Vinylpivalat, Allylacetat, Allylbutyrat und Allylstearat.

Außerdem sind N-Vinylcarbonsäureamide von Carbonsäuren mit 1 bis 8 Kohlenstoffatomen, wie N-Vinylformamid, N-Vinyl-N-methylformamid, N-Vinylacetamid, N-Vinyl-N-methylacetamid, N-Vinyl-N-ethylacetamid, N-Vinyl-N-methylpropionamid und N-Vinylpropionamid als Monomere (c) geeignet. Weiterhin sind hier auch N-Vinylverbindungen von stickstoffhaltigen Heterocyclen wie N-Vinylimidazol, N-Vinylmethylimidazol, N-Vinylpyrrolidon und N-Vinylcaprolactam zu nennen.

Es kommen als Monomere (c) weiterhin Styrol und die davon abgeleiteten Derivate wie α-Methylstyrol, 3-Methylstyrol oder 4-Methylstyrol in Betracht.

Weiterhin kommen Mischungen der unter (c) genannten Monomeren für die erfindungsgemäßen Copolymerisate in Betracht.

Bevorzugt von diesen Monomeren (c) werden Acrylsäure, Methacrylsäure, C₁₆-α-Olefin, C₂₀- bis C₂₄-α-Olefin, C₁₄- bis C₂₀-Alkylvinylether, C₁₄- bis C₂₀-Alkylester von monoethylenisch ungesättigten C₃- bis C₆-Mono- und Dicarbonsäuren und Styrol.

Die Copolymerisate enthalten die Monomeren (a) bis (c) vorzugsweise in Mengen von 35 bis 70 mol-%, insbesondere 45 bis 60 mol-% Monomer (a), 30 bis 65 mol-%, insbesondere 40 bis 55 mol-% Monomer (b) und 0 bis 30 mol-%, insbesondere 0 bis 10 mol-%, vor allem 0 bis 5 mol-% Monomer (c).

Die Copolymerisate können nach allen bekannten üblichen Polymerisationsverfahren hergestellt werden, z.B. durch Substanz-, Emulsions-, Suspensions-, Fällungs- und Lösungspolymerisation. Bei allen genannten Polymerisationsverfahren wird unter Ausschluß von Sauerstoff gearbeitet, vorzugsweise in einem Stickstoffstrom. Für alle Polymerisationsmethoden werden die üblichen Apparaturen verwendet, z.B. Autoklaven und Kessel. Besonders bevorzugt ist die Substanzpolymerisation der Monomeren der Gruppen (a) bis (c). Sie kann bei Temperaturen von 80 bis 300°C vorzugsweise von 100 bis 200°C, durchgeführt werden, wobei die niedrigste zu wählende Polymerisationstemperatur vorzugsweise etwa mindestens 20°C über der Glastemperatur des gebildeten Polymeren liegt. Je nach Molekulargewicht, das die Copolymerisate haben sollten, werden die Polymerisationsbedingungen gewählt. Polymerisation bei hohen Temperaturen ergibt Copolymerisate mit niedrigen Molekulargewichten, während bei niedrigen Polymerisationstemperaturen Polymerisate mit höheren Molekulargewichten entstehen.

Die Copolymerisation wird vorzugsweise radikalisch, d.h. in Gegenwart von Radikale bildenden Verbindungen, durchgeführt. Man benötigt von diesen Verbindungen bis zu 10, vorzugsweise 0,2 bis 5 Gew.-%, bezogen auf die bei der Copolymerisation eingesetzten Monomeren. Geeignete Polymerisationsinitiatoren sind beispielsweise Peroxidverbindungen wie tert.-Butylperpivalat, tert.-Butylperneodecanoat, tert.-Butylperethylhexanoat, tert.-Butylperisobutyrat, Di-tert.-Butylperoxid, Di-tert.-Amylperoxid, Diacetylperoxydicarbonat oder Dicyclohexylperoxydicarbonat sowie Azoverbindungen wie 2,2'-Azobisisobutyronitril. Die Initiatoren können allein oder in Mischung untereinander angewendet werden.

Die Polymerisationsinitiatoren werden bei der Substanzpolymerisation vorzugsweise separat oder als Lösung in einem geeigneten Lösungsmittel oder in Form einer Lösung oder als Dispersion in den Monomeren (b) oder (c) in den Polymerisationsreaktor eingebracht. Bei der Copolymerisation können selbstverständlich auch Redox-Coinitiatoren mitverwendet werden, z.B. Benzoin, Dimethylanilin, Ascorbinsäure sowie organisch lösliche Komplexe von Schwermetallen wie Kupfer, Cobalt, Eisen, Mangan, Nickel und Chrom. Die Mitverwendung von Redox-Coinitiatoren gestattet es, die Polymerisation bei tieferer Temperatur durchzuführen. Die üblicherweise verwendeten Mengen an Redox-Coinitiatoren betragen etwa 0,1 bis 1.000 ppm, bezogen auf die eingesetzten Mengen an Monomeren. Falls das Monomerengemisch an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so daß in jedem Temperaturintervall eine ausreichende Konzentration an Radikalen zur Verfügung steht.

Um niedrigmolekulare Polymerisate herzustellen, ist es oft zweckmäßig, die Copolymerisation in Gegenwart von Reglern durchzuführen. Hierfür können übliche Regler verwendet werden wie C₁- bis C₄-Aldeyhde, Ameisensäure und organische SH-Gruppen enthaltende Verbindungen wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan. Die Polymerisationsregler werden im allgemeinen in Mengen von 0,1 bis 10 Gew.-%, bezogen auf die Monomeren, eingesetzt.

Um höhermolekulare Copolymerisate herzustellen, ist es oft zweckmäßig, bei der Polymerisation in Gegenwart von Kettenverlängerern zu arbeiten. Solche Kettenverlängerer sind Verbindungen mit zwei- oder mehrfach ethylenisch ungesättigten Gruppen wie Divinylbenzol, Pentaerythrittriallylether, Ester von Glykolen wie Glykoldiacrylat, Glycerintriacrylat und Polyethylenglykoldiacrylate. Sie können bei der Polymerisation in Mengen bis zu 5 Gew.-% zugesetzt werden.

Die erfindungsgemäßen Copolymerisate weisen meist gewichtsmittlere Molekulargewichte im Bereich von 800 bis 50.000 auf. Bevorzugt werden Copolymerisate mit einem zahlenmittleren Molekulargewicht im Bereich von 1.000 bis 20.000.

Die Copolymerisation kann kontinuierlich oder diskontinuierlich durchgeführt werden. Beispielsweise kann man das verzweigte Olefin (b) oder ein Gemisch verschiedener Olefine (b) im Reaktor vorlegen und unter Rühren auf die gewünschte Polymerisationstemperatur erhitzen. Sobald das Olefin die Polymerisationstemperatur erreicht hat, dosiert man die weiteren Comonomeren zu. Falls ein Initiator eingesetzt wird, wird er dem Reaktionsgemisch, vorzugsweise separat oder gelöst in einem zur Polymerisation gelangenden Monomer oder in einem geeigneten Lösungsmittel, zudosiert. Der Polymerisationsregler wird, sofern er eingesetzt wird, entweder separat oder ebenfalls in einem Monomer gelöst der polymerisierenden Mischung zugefügt. Die Säureanhydride (a), insbesondere Maleinsäureanhydrid, werden vorzugsweise in Form einer Schmelze dem Reaktionsgemisch zugegeben. Die Temperatur dieser Schmelze beträgt etwa 70 bis 90°C. Die Copolymerisationsschmelze wird anschließend zweckmäßigerweise weiterverarbeitet.

Die so hergestellten erfindungsgemäßen Copolymerisate werden normalerweise nach dem Abkühlen auf niedrigere Temperaturen, z.B. auf Raumtemperatur, oder vorzugsweise in Form der Schmelze, die eine Temperatur im Bereich von 80 bis 180°C, vorzugsweise von 90 bis 150°C hat, solvolysiert. Die Solvolyse der Anhydridgruppen der Copolymerisate besteht im einfachsten Fall in einer Hydrolyse und anschließender Neutralisation. Es ist besonders vorteilhaft, in druckdichten Apparaturen zu arbeiten und darin direkt durch Zugabe von Wasser zu einer Schmelze der bei der Substanzpolymerisation erhältlichen Copolymerisate die Anhydridgruppen in Carboxylgruppen zu überführen und durch anschließende Zugabe von Basen mindestens 10 % aller im Polymerisat vorliegenden Carboxylgruppen zu neutralisieren. Hydrolyse und Neutralisation können jedoch auch praktisch gleichzeitig durch Zugabe verdünnter wäßriger Basen zur Copolymerisatschmelze vorgenommen werden. Die Mengen an Wasser und an Neutralisationsmittel werden dabei so gewählt, daß vorzugsweise 10 bis 70 Gew.-%, insbesondere 20 bis 60 Gew.-% Feststoffe enthaltende Dispersionen oder Lösungen entstehen, die in den Handel gebracht werden können. Daraus werden dann Präparationslösungen durch Verdünnen auf Feststoffgehalte von 0,5 bis 70 Gew.-%, insbesondere 1 bis 60 Gew.-%, vor allem 3 bis 35 Gew.-% hergestellt.

Die durch Substanzpolymerisation erhältlichen Copolymerisate können auch durch Zugabe von primären und/oder sekundären Aminen solvolysiert werden. Die Solvolyse wird dabei mit solchen Mengen an Aminen durchgeführt, daß 10 bis 50 % der aus den einpolymerisierten Dicarbonsäureanhydridanteilen insgesamt entstehenden Carboxylgruppen amidiert sind. Nach der Bildung von Halbamidgruppen im Copolymerisat erfolgt die Neutralisation. Sie wird soweit geführt, daß mindestens 10 % der Carboxylgruppen des bei der Substanzpolymerisation anfallenden Copolymerisates neutralisiert werden. Ferner kann auch mit Aminocarbonsäuren sowie Salzen von Aminocarbonsäuren, vorzugsweise den Alkalimetallsalzen, solvolysiert werden. Besonders bevorzugt werden Alkalimetallsalze von α-Aminocarbonsäuren eingesetzt, wobei die Alkalimetallsalze des Sarcosins ganz besonders vorteilhaft sind.

Die Solvolyse mittels Salzen von Aminocarbonsäuren wird zweckmäßigerweise in wäßrigem Medium ausgeführt. Die Solvolyse wird dabei mit solchen Mengen an Aminocarboxylaten durchgeführt, daß 10 bis 50 % der aus den einpolymerisierten Dicarbonsäureanhydrideinheiten insgesamt entstehenden Carboxylgruppen verestert werden. Anschließend erfolgt eine Neutralisation, bei der mindestens 10 % der insgesamt aus dem Anhydridgruppen enthaltenden Copolymerisat entstehenden Carboxylgruppen neutralisiert sind.

Vorzugsweise werden jeweils 25 bis 50 % der aus den einpolymerisierten Dicarbonsäureanhydriden insgesamt entstehenden Carboxylgruppen amidiert oder verestert. Als Neutralisationsmittel eignen sich beispielsweise Ammoniak, Amine, z.B. Triethylamin, Tributylamin oder Triethanolamin, Alkalimetall- und Erdalkalimetallbasen, z.B. Natronlauge, Kalilauge, Magnesiumhydroxid, Calciumhydroxid, Bariumhydroxid sowie sämtliche Amine, die auch zur Amidierung der Copolymerisate eingesetzt werden. Vorzugsweise erfolgt die Neutralisation durch Zugabe von wäßriger Natronlauge zum Copolymerisat. Die Neutralisation der Anhydridgruppen enthaltenden Copolymerisate wird mindestens bis zu einem solchen Grad durchgeführt, daß man in Wasser dispergierbare Copolymerisate erhält. Dieser Neutralisationsgrad liegt bei mindestens 2 %, insbesondere mindestens 10 % der insgesamt aus den Anhydridgruppen entstehenden Carboxylgruppen. Der Neutralisationsgrad ist außerdem von der Kettenlänge des jeweils verwendeten verzweigten Olefins und der Struktur des ggf. verwendeten Comonomeren aus der Gruppe (c) abhängig.

Zur Amidbildung kann man Ammoniak und primäre und sekundäre Amine einsetzen. Die Amidbildung erfolgt vorzugsweise in Abwesenheit von Wasser durch Reaktion der Anhydridgruppen des Copolymerisats mit Ammoniak oder den Aminen. Die in Betracht kommenden primären und sekundären Amine können 1 bis 40, vorzugsweise 3 bis 30 Kohlenstoffatome aufweisen. Geeignete Amine sind beispielsweise Methylamin, Ethylamin, n-Propylamin, Isopropylamin, n-Butylamin, Isobutylamin, Hexylamin, Cyclohexylamin, Methylcyclohexylamin, 2-Ethylhexylamin, n-Octylamin, Isotridecylamin, Talgfettamin, Stearylamin, Oleylamin, Dimethylamin, Diethylamin, Di-n-propylamin, Di-isopropylamin, Di-n-butylamin, Di-isobutylamin, Dihexylamin, Di-cyclohexylamin, Dimethylcyclohexylamin, Di-2-ethylhexylamin, Di-n-octylamin, Di-isotridecylamin, Ditalgfettamin, Distearylamin, Dioleylamin, Ethanolamin, Diethanolamin, n-Propanolamin, Di-n-propanolamin und Morpholin. Vorzugsweise wird Morpholin verwendet.

Durch Wahl geeigneter Reaktionsbedingungen lassen sich mit Ammoniak oder primären Aminen aus den Dicarbonsäureanhydrideinheiten des Copolymerisats Imidstrukturen erzeugen. Diese imidfunktionalisierten Copolymerisate lassen sich analog zu den veresterten oder amidierten Copolymerisaten in eine wäßrige Dispersion oder Lösung überführen.

Um die bei der Substanzpolymerisation erhaltenen Anhydridgruppen aufweisenden Copolymerisate partiell zu verestern, werden sie mit Alkoholen umgesetzt. Auch die Veresterung erfolgt vorzugsweise unter Ausschluß von Wasser. Geeignete Alkohole können 1 bis 40, vorzugsweise 3 bis 30 C-Atome enthalten. Es können primäre, sekundäre und tertiäre Alkohole Verwendung finden.

Man kann sowohl gesättigte aliphatische Alkohole als auch ungesättigte Alkohole wie beispielsweise Oleylalkohol einsetzen. Vorzugsweise werden einwertige, primäre oder sekundäre Alkohole verwendet, z.B. Methanol, Ethanol, n-Propanol, Isopropanol, n-Butanol, Isobutanol, n-Pentanol und Isomere, n-Hexanol und Isomere, n-Octanol und Isomere, z.B. 2-Ethylhexanol, Nonanole, Decanole, Dodecanole, Tridecanole, Cyclohexanol, Talgfettalkohol, Stearylalkohol sowie die technisch durch Oxosynthese leicht zugänglichen Alkohole bzw. Alkoholgemische mit 9 bis 19 C-Atomen wie z.B. C_{9/11}-Oxoalkohol, C_{13/15}-Oxoalkohol sowie Ziegleralkohole, die beispielsweise unter dem Namen Alfole® bekannt sind, mit 12 bis 24 C-Atomen. Weiterhin können alkoxylierte Alkohole wie Fettalkoholethoxylate oder -propoxylate, Oxoalkoholethoxylate oder -propoxylate, Polyethylenglykole, Polypropylenglykole oder Ethylenoxid-Propylenoxid-Blockcopolymere eingesetzt werden.

Vorzugsweise verwendet man Alkohole mit 4 bis 24 C-Atomen wie z.B. n-Butanol, Isobutanol, Amylalkohol, 2-Ethylhexanol, Tridecanol, Talgfettalkohol, Stearylalkohol, C_{9/11}-Oxoalkohol, C_{13/15}-Oxoalkohol, C_{12/14}-Alfole und C_{16/18}-Alfole.

Nach der partiellen Umwandlung der Anhydridgruppen in Halbamid- oder Halbestergruppen erfolgt die Hydrolyse von weiteren der noch vorhandenen Anhydridgruppen des Polymerisats. Die Hydrolyse von weiteren der noch vorhandenen Anhydridgruppen des Copolymerisats kann auch gleichzeitig mit der noch erforderlichen partiellen Neutralisation vorgenommen werden, indem man eine wäßrige Base zu dem partiell amidierten bzw. veresterten und noch Anhydridgruppen enthaltenden Copolymerisat zusetzt. Zur Beschleunigung der Hydrolyse der Anhydridgruppen kann auch ein geeigneter Katalysator zugesetzt werden, beispielsweise Pyridinderivate wie 4-Dimethylaminopyridin. Andererseits kann auch ein gewisser Anteil an nichthydrolysierten Dicarbonsäureanhydridgruppen in der wäßrigen Formulierung verbleiben. Bei der Hydrolyse der Anhydridgruppen wird die Menge an Wasser und Base so gewählt, daß die Konzentration der Dispersion oder der Lösung des Copolymerisats vorzugsweise 20 bis 55 Gew.-% beträgt. Der pH-Wert der gebrauchsfertigen Mittel beispielsweise zum Nachgerben, Fetten oder Hydrophobieren liegt im Bereich von etwa 4 bis 10.

Die so erhaltenen wäßrigen Dispersionen oder Lösungen des Copolymerisats sind beständig und lagerstabil. Sie eignen sich in hervorragender Weise zur Veredlung von Leder und Pelzen, weil sie neben einer besonders ausgeprägten hydrophobierenden, fettenden und nachgerbenden Wirkung auch besonders gute Penetrationseigenschaften aufweisen. Das mit diesen Copolymerisatdispersionen bzw. -lösungen behandelte Leder- und Pelzmaterial zeigt nur noch eine geringe Wasseraufnahmebereitschaft und Wasserdurchlässigkeit. Die erfindungsgemäßen Dispersionen bzw. Lösungen verleihen der Ware eine hohe Fülle und hohe Zug- und Weiterreißfestigkeiten, so daß eine zusätzliche Behandlung mit handelsüblichen Nachgerbstoffen, beispielsweise mit vegetabilen Gerbstoffen oder synthetischen organischen Gerbstoffen (Synthanen) auf Basis von Phenolsulfonsäure-Phenol-Formaldehyd-Kondensationsprodukten, in den meisten Fällen nicht mehr erforderlich ist.

Den erfindungsgemäßen Dispersionen oder Lösungen können Emulgatoren in Anteilen bis zu 40 Gew.-%, bezogen auf die Menge an Copolymerisat, zugemischt werden, um ein Lederfettungsmittel mit weiteren verbesserten Penetrationseigenschaften herzustellen. Diese emulgatorhaltigen wäßrigen Dispersionen oder Lösungen weisen hervorragende fettende und füllende Wirkung auf bei gleichzeitig sehr guten Penetrationseigenschaften. Als Emulgatoren werden beispielsweise alkoxylierte Fettalkohole oder Oxoalkohole, Blockcopolymere aus Ethylenoxy- und Propylenoxy-Einheiten, alkoxylierte Fettsäuren, ethoxylierte Fettsäureamide, Fettsäurealkanolamide, Fettsäure-Ammoniumsalze, Fettalkoholphosphate, Alkylglucoside, Alkylphenolalkoxylate, 2-Sulfobernsteinsäure-mono oder -diester oder N-Acylaminosäuren oder Mischungen davon verwendet.

Die erfindungsgemäßen Dispersionen oder Lösungen können weiterhin auch Schutzkolloide in Anteilen bis zu 40 Gew.-%, bezogen auf die Menge an Copolymerisat, enthalten. Diese schutzkolloidhaltigen wäßrigen Dispersionen oder Lösungen weisen ebenfalls hervorragende fettende und füllende Wirkung auf bei gleichzeitig sehr guten Penetrationseigenschaften. Als Schutzkolloide werden beispielsweise Polyvinylalkohol, abgebaute Stärke, modifizierte Stärken, Carboxymethylcellulose, Hydroxyethylcellulose oder Polyvinylpyrrolidon eingesetzt.

Die erfindungsgemäßen wäßrigen Dispersionen und Lösungen können weiterhin als Dispergiermittel für wäßrige Suspensionen von anorganischen oder organischen Pigmenten verwendet werden. So lassen sich beispielsweise wäßrige Suspensionen von Zement, Gipsdihydrat, Gipshalbhydrat, Flugasche, Kaolin, Titandioxid, Calciumcarbonat, Eisenoxiden wie FeO(OH), Fe₂O₃ und Fe₃O₄, Tonen, Quarzgestein oder Feldspaten mit den erfindungsgemäßen wäßrigen Dispersionen oder Lösungen verflüssigen. Auch wäßrige Suspensionen von organischen Pigmenten, die einen gewissen Anteil an organischen Lösungsmitteln enthalten können, lassen sich mit den erfindungsgemäßen wäßrigen Dispersionen oder Lösungen dispergieren. Als organische Pigmente kommen beispielsweise Phthalocyaninpigmente wie C.I. Pigment Blue 15, Diarylgelbpigmente wie C.I. Pigment Yellow 17, verlackte BON-Säurepigmente wie C.I. Pigmente 52, β-Naphtholpigmente wie C.I. Pigment Orange 5 oder Naphthol AS-Pigmente wie C.I. Pigment Blue 25 in Betracht. Die erfindungsgemäßen wäßrigen Dispersionen oder Lösungen werden hierbei meist in Mengen von 0,05 bis 10, vorzugsweise 0,1 bis 5 Gew.-% (Feststoffanteil des Copolymerisats bezogen auf die wäßrige Pigmentsuspension) eingesetzt.

Weiterhin sind Gegenstand der vorliegenden Erfindung neue Copolymerisate, welche durch Copolymerisation von
(a') 20 bis 90 mol-% mindestens einer monoethylenisch ungesättigten C₄- bis C₁₂-Dicarbonsäure oder deren Anhydrid mit
(b') 5 bis 80 mol-% mindestens eines verzweigtkettigen Oligomeren eines linearen 1-Olefins, wobei das lineare 1-Olefin aus mindestens 4 Kohlenstoffatomen besteht und das Oligomere eine reaktive Vinyl- oder Vinylidengruppe trägt, und
(c') 5 bis 50 mol-% mindestens eier weiteren monoethylenisch ungesättigten Verbindung, die mit den Monomeren (a') und (b') copolymerisierbar ist
erhältlich sind.

Weiterhin sind Gegenstand der vorliegenden Erfindung neue Copolymerisate, welche durch Copolymerisation von
(a) 20 bis 95 mol-% mindestens einer monoethylenisch ungesättigten C₄- bis C₁₂-Dicarbonsäure oder deren Anhydrid mit
(b'') 5 bis 80 mol-% mindestens eines verzweigtkettigen Oligomeren eines linearen 1-Olefins, wobei das lineare 1-Olefin aus mindestens 7 Kohlenstoffatomen besteht und das Oligomere eine reaktive Vinyl- oder Vinylidengruppe trägt, und
(c) 0 bis 50 mol-% mindestens einer weiteren monoethylenisch ungesättigten Verbindung, die mit den Monomeren (a) und (b'') copolymerisierbar ist,
erhältlich sind.

Die Bestimmung des zahlenmittleren und des gewichtsmittleren Molekulargewichts bei den nachfolgenden Beispielen erfolgte mittels der Gelpermeationschromatographie. Als Elutionsmittel wurde Tetrahydrofuran verwendet. Als Säulenmaterial wurden die vernetzten Polystyrolgele Ultrastyragel® (Fa. Waters) bzw. TSK-HXL (Fa. Tosoh) verwendet. Die Eichung erfolgte mit engverteilten Polystyrol-Standards (Fa. Polymer Laboratories).

### Beispiele

### Herstellung der wäßrigen Copolymerisatdispersionen

### Dispersion 1

In einem für Polymerisationen ausgerüsteten Reaktor aus Stahl mit einem Rührer und Dosierungsvorrichtungen wurden 1000 g eines Propenoligomeren (zahlenmittleres Molekulargewicht Mₙ = 260 g/mol) vorgelegt und unter Rühren in einem schwachen Stickstoffstrom auf 150°C erhitzt. Sobald diese Temperatur erreicht war, fügte man gleichmäßig 377 g auf 70°C erhitztes Maleinsäureanhydrid und separat davon 13,8 g Ditertiärbutylperoxid innerhalb von 4 h zu. Anschließend wurde das Reaktionsgemisch 2 h bei 150°C gerührt und unter Rühren auf 90°C abgekühlt. Innerhalb einer halben Stunde gab man dann 4440 g einer 2,08 gew.-%igen wäßrigen Natronlauge von 90°C zu. Das Reaktionsgemisch wurde 4 h in dem Temperaturbereich von 90 bis 95°C gerührt und danach auf Umgebungstemperatur abgekühlt. Man erhielt auf diese Weise eine schwachviskose wäßrige Dispersion mit einem Feststoffgehalt von 22,6 Gew.-%. Das zahlenmittlere Molekulargewicht des nicht hydrolysierten Polymerisats aus Propenoligomerem und Maleinsäureanhydrid wurde mittels Gelpermeationschromatographie (Lösungsmittel Tetrahydrofuran, Polystyrolstandard) bestimmt: Mₙ = 1690, M_{w} = 8500.

### Dispersion 2

In einem für Polymerisationen ausgerüsteten Reaktor aus Stahl mit einem Rührer und Dosierungsvorrichtungen wurden 840 g eines Hexenoligomeren (zahlenmittleres Molekulargewicht Mₙ = 280 g/mol) vorgelegt und unter Rühren in einem schwachen Stickstoffstrom auf 150°C erhitzt. Sobald diese Temperatur erreicht war, fügte man gleichmäßig 294 g auf 70°C erhitztes Maleinsäureanhydrid und separat davon 11,3 g Ditertiärbutylperoxid innerhalb von 6 h zu. Anschließend wurde das Reaktionsgemisch 1 h bei 150°C gerührt und unter Rühren auf 90°C abgekühlt. Innerhalb einer halben Stunde gab man dann 3383 g einer 2,13 gew.-%igen wäßrigen Natronlauge von 90°C zu. Das Reaktionsgemisch wurde 4 h in dem Temperaturbereich von 90 bis 95°C gerührt und danach auf Umgebungstemperatur abgekühlt. Man erhielt auf diese Weise eine schwachviskose wäßrige Dispersion mit einem Feststoffgehalt von 23,5 Gew.-%. Das zahlenmittlere Molekulargewicht des nicht hydrolysierten Polymerisats aus Hexenoligomerem und Maleinsäureanhydrid wurde mittels Gelpermeationschromatographie (Lösungsmittel Tetrahydrofuran, Polystyrolstandard) bestimmt: Mₙ = 1740, M_{w} = 6200.

### Dispersion 3

In einem für Polymerisationen ausgerüsteten Reaktor aus Stahl mit einem Rührer und Dosierungsvorrichtungen wurden 884 g eines Decenoligomeren (zahlenmittleres Molekulargewicht Mₙ = 340 g/mol) vorgelegt und unter Rühren in einem schwachen Stickstoffstrom auf 150°C erhitzt. Sobald diese Temperatur erreicht war, fügte man gleichmäßig 255 g auf 70°C erhitztes Maleinsäureanhydrid und separat davon 11,4 g Ditertiärbutylperoxid innerhalb von 4,5 h zu. Anschließend wurde das Reaktionsgemisch 1 h bei 150°C gerührt und unter Rühren auf 90°C abgekühlt. Innerhalb einer halben Stunde gab man dann 3400 g einer 1,84 gew.-%igen wäßrigen Natronlauge von 90°C zu. Das Reaktionsgemisch wurde 4 h in dem Temperaturbereich von 90 bis 95°C gerührt und danach auf Umgebungstemperatur abgekühlt. Man erhielt auf diese Weise eine schwachviskose wäßrige Dispersion mit einem Feststoffgehalt von 23,8 Gew.-%. Das zahlenmittlere Molekulargewicht des nicht hydrolysierten Polymerisats aus Decenoligomerem und Maleinsäureanhydrid wurde mittels Gelpermeationschromatographie (Lösungsmittel Tetrahydrofuran, Polystyrolstandard) bestimmt: Mₙ = 1710, M_{w} = 5600.

### Anwendungstechnische Versuche auf Leder

- Ausgangsmaterial:: chromgegerbtes Rind wet-blue
- Falzstärke:: 1,8 mm

### (Prozentangaben beziehen sich auf das Falzgewicht)

| | | | |
|---|---|---|---|
| Waschen: | 200,0 % | Wasser 40°C Flotte ablassen | 10 min |
| Neutralisation: | 75,0 % | Wasser 35°C | 120 min |
| | 1,5 % | Natriumformiat | |
| | 1,0 % | Natriumbicarbonat | |
| | | pH-Floote: 5,0 | |
| | | Schnitt (BKG): gleichmäßig | |
| | | Flotte ablassen | |
| Waschen: | 200,0 % | Wasser 35°C Flotte ablassen | 10 min |
| Nachgerbung: (mit 2 % Wirksubstanz) | 100,0 % | Wasser 45°C | |
| Versuch A1, B1: | 8,8 % | Dispersion 1 (22,6 %ig) | 40 min |
| Versuch A2, B2: | 8,5 % | Dispersion 2 (23,5 %ig) | 40 min |
| Versuch A3, B3: | 8,4 % | Dispersion 3 (23,8 %ig) | 40 min |
| Versuch A4, B4: | 6,7 % | herkömmlicher Polymergerbstoff auf Basis Polymethacrylat (Relugan® SE der BASF AG, 30 %ig) | 40 min |
| | 0,2 % | Ammoniak 25 %ig | 5 min |
| Färbung: | 2,0 % | üblicher Metallkomplexfarbstoff | 30 min |
| Fettung: Versuche A1-A4 | 8,0 % | übliches Hydrophobiermittel auf Basis Paraffin | 80 min |
| alternativ: Versuche B1-B4 | 6,0 % | übliches Silikon- und Paraffin-haltiges Hydrophobiermittel | 80 min |
| Absäuern | 1,5 % | Ameisensäure 85 %ig | 2x10 min + 20 min |
| | | Flotte ablassen | |
| Waschen: | 200,0 % | Wasser 40°C Flotte ablassen | 10 min |
| Fixierung: | 100,0 % | Wasser 30°C | 90 min |
| | 3,0 % | üblicher Chromgerbstoff, (Basiszität 40%, 25 % ber. als Cr₂O₃) | |
| | | Flotte ablassen | |
| Waschen: | 200,0 % | Wasser 25°C Flotte ablassen | 10 min |
| | | Leder über Nacht auf Bock, | |
| | | ausrecken, | |
| | | vakuumieren 2 min/80°C, hängetrocknen, | |
| | | konditionieren, | |
| | | stollen, | |
| | | kiss-plate | |

Die mit Dispersion 1 erhaltenen Leder (Versuch A1, B1) waren voll und weich im Griff, gleichmäßig gefärbt und zeigten sehr gute Ergebnisse bei den dynamischen Tests für Prüfung der Güte der Hydrophobierung (siehe unten).

Die mit Dispersion 2 erhaltenen Leder (Versuch A2, B2) hatten einen runden, weichen Griff, waren gleichmäßig gefärbt und zeigten sehr gute Ergebnisse bei den dynamischen Tests für Prüfung und Güte der Hydrophobierung (siehe unten).

Die mit Dispersion 3 erhaltenen Leder (Versuch A3, B3) waren recht standig bei leicht wachsigem Griff, gleichmäßig gefärbt und zeigten sehr gute Ergebnisse bei den dynamischen Tests für Prüfung der Güte und Hydrophobierung (siehe unten).

Die zum Vergleich mit Dispersion 4 erhaltenen Leder (Versuch A4, B4) waren standig und hatten einen runden Griff und waren gleichmäßig gefärbt. Die Ergebnisse bei den dynamischen Tests zur Wasserfestigkeit sind unten tabellarisch wiedergegeben.

Die nach Versuchsserie B erhaltenen Leder waren gegenüber denen der Serie A alle insgesamt etwas weicher und hatten einen leicht samtigen Griff.

Prüfergebnisse Hydrophobierung:

| Vers.-Nr. | Bally-Penetrometer Wasserdurchtritt nach | (15 % Stauchung) Wasseraufnahme nach 24 Stunden | Maeser-Test |
|---|---|---|---|
| A1 | >24 Stunden | 24 Gew.-% | 23000 |
| A2 | >24 Stunden | 27 Gew.-% | 32000 |
| A3 | 15 Stunden | 24 Gew.-% | 15000 |
| A4 | 15 Stunden | 29 Gew.-% | 2000 |
| | | | |
| B1 | >24 Stunden | 22 Gew.-% | 30000 |
| B2 | >24 Stunden | 23 Gew.-% | >50000 |
| B3 | >24 Stunden | 22 Gew.-% | 25000 |
| B4 | >24 Stunden | 25 Gew.-% | 9000 |

## Patentansprüche

1. Wäßrige Lösungen oder wäßrige Dispersionen von Copolymerisaten, die erhältlich sind durch Copolymerisation von
(a) 20 bis 95 mol-% mindestens einer monoethylenisch ungesättigten C₄- bis C₁₂-Dicarbonsäure oder deren Anhydrid mit
(b) 5 bis 80 mol-% mindestens eines verzweigtkettigen Oligomeren oder Polymeren mit einer Vinyl-, Vinyliden- oder Alkylvinylen-Endgruppe, welches aus mindestens 9 C-Atomen besteht, und
(c) 0 bis 50 mol-% mindestens einer weiteren monoethylenisch ungesättigten Verbindung, die mit den Monomeren (a) und (b) copolymerisierbar ist,
mit einem Gehalt an diesen Copolymerisaten von 0,5 bis 70 Gew.-%, bezogen auf die Gesamtmenge der Lösungen bzw. Dispersionen.

2. Wäßrige Copolymerisat-Lösungen oder wäßrige Copolymerisat-Dispersionen nach Anspruch 1, in denen die Copolymerisate an ihren Anhydrid-Gruppierungen partiell oder vollständig mit hydroxyfunktionellen Verbindungen oder Aminen solvolysiert vorliegen können und vorhandene oder bei der Solvolyse entstandene Carboxylgruppen partiell oder vollständig neutralisiert worden sein können.

3. Wäßrige Copolymerisat-Lösungen oder wäßrige CopolymerisatDispersionen nach Anspruch 1 oder 2, enthaltend zusätzlich Emulgatoren in einer Menge bis zu 40 Gew.-%, bezogen auf die Gesamtmenge an Copolymerisat.

4. Wäßrige Copolymerisat-Lösungen oder wäßrige CopolymerisatDispersionen nach Anspruch 1 oder 2, enthaltend zusätzlich Schutzkolloide in einer Menge bis zu 40 Gew.-%, bezogen auf die Gesamtmenge an Copolymerisat.

5. Verwendung von wäßrigen Copolymerisat-Lösungen oder wäßrigen Copolymerisat-Dispersionen gemäß den Ansprüchen 1 bis 4 zur Veredlung von Leder und Pelzen.

6. Verwendung von wäßrigen Copolymerisat-Lösungen oder wäßrigen Copolymerisat-Dispersionen gemäß den Ansprüchen 1 bis 4 als Dispergiermittel für anorganische oder organische Pigmente.

7. Copolymerisate, erhältlich durch Copolymerisation von
(a') 20 bis 90 mol-% mindestens einer monoethylenisch ungesättigten C₄- bis C₁₂-Dicarbonsäure oder deren Anhydrid mit
(b') 5 bis 80 mol-% mindestens eines verzweigtkettigen Oligomeren eines linearen 1-Olefins, wobei das lineare 1-Olefin aus mindestens 4 Kohlenstoffatomen besteht und das Oligomere eine reaktive Vinyl- oder Vinylidengruppe trägt, und
(c') 5 bis 50 mol-% mindestens einer weiteren monoethylenisch ungesättigten Verbindung, die mit den Monomeren (a') und (b') copolymerisierbar ist.

8. Copolymerisate, erhältlich durch Copolymerisation von
(a) 20 bis 95 mol-% mindestens einer monoethylenisch ungesättigten C₄- bis C₁₂-Dicarbonsäure oder deren Anhydrid mit
(b'') 5 bis 80 mol-% mindestens eines verzweigtkettigen Oligomeren eines linearen 1-Olefins, wobei das lineare 1-Olefin aus mindestens 7 Kohlenstoffatomen besteht und das Oligomere eine reaktive Vinyl- oder Vinylidengruppe trägt, und
(c) 0 bis 50 mol-% mindestens einer weiteren monoethylenisch ungesättigten Verbindung, die mit den Monomeren (a) und (b'') copolymerisierbar ist.

## Claims

1. An aqueous solution or aqueous emulsion of a copolymer which is obtainable by copolymerization of
(a) from 20 to 95 mol% of at least one monoethylenically unsaturated C₄-C₁₂-dicarboxylic acid or the anhydride thereof with
(b) from 5 to 80 mol% of at least one branched oligomer or polymer which has a vinyl, vinylidene or alkylvinylene terminal group and is of at least 9 carbon atoms and
(c) from 0 to 50 mol% of at least one further monoethylenically unsaturated compound which is copolymerizable with the monomers (a) and (b),
containing from 0.5 to 70 % by weight, based on the total amount of the solution or emulsion, of this copolymer.

2. An aqueous copolymer solution or aqueous copolymer emulsion as claimed in claim 1, in which the copolymer may be present in a form in which some or all of its anhydride groups are solvolyzed with compounds having hydroxyl functional groups or with amines and some or all of existing carboxyl groups or of carboxyl groups formed in the solvolysis may have been neutralized.

3. An aqueous copolymer solution or aqueous copolymer emulsion as claimed in claim 1 or 2, additionally containing an emulsifier in an amount of up to 40 % by weight, based on the total amount of copolymer.

4. An aqueous copolymer solution or aqueous copolymer emulsion as claimed in claim 1 or 2, additionally containing a protective colloid in an amount of up to 40 % by weight, based on the total amount of copolymer.

5. Use of an aqueous copolymer solution or aqueous copolymer emulsion as claimed in any of claims 1 to 4 for the treatment of leather and skins.

6. Use of an aqueous copolymer solution or aqueous copolymer emulsion as claimed in any of claims 1 to 4 as a dispersant for inorganic or organic pigments.

7. A copolymer obtainable by copolymerization of
(a') from 20 to 90 mol% of at least one monoethylenically unsaturated C₄-C₁₂-dicarboxylic acid or the anhydride thereof with
(b') from 5 to 80 mol% of at least one branched oligomer of a linear 1-olefin, the linear 1-olefin being of at least 4 carbon atoms and the oligomer carrying a reactive vinyl or vinylidene group, and
(c') from 5 to 50 mol% of at least one further monoethylenically unsaturated compound which is copolymerizable with the monomers (a') and (b').

8. A copolymer obtainable by copolymerization of
(a) from 20 to 95 mol% of at least one monoethylenically unsaturated C₄-C₁₂-dicarboxylic acid or the anhydride thereof with
(b'') from 5 to 80 mol% of at least one branched oligomer of a linear 1-olefin, the linear 1-olefin being of at least 7 carbon atoms and the oligomer carrying a reactive vinyl or vinylidene group, and
(c) from 0 to 50 mol% of at least one further monoethylenically unsaturated compound which is copolymerizable with the monomers (a) and (b'').

## Revendications

1. Solutions aqueuses ou dispersions aqueuses de copolymères, pouvant être obtenus par copolymérisation de
(a) 20 à 95% en moles d'au moins un acide dicarboxylique en C₄-C₁₂, à insaturation monoéthylénique ou son anhydride, avec
(b) 5 à 80% en moles d'au moins un polymère ou un oligomère ramifié ayant un groupement terminal vinyle, vinylidène ou alkylvinylène, constitué d'au moins 9 atomes de carbone, et
(c) 0 à 50% en moles d'au moins un autre composé à insaturation monoéthylénique, pouvant être copolymérisé avec les monomères (a) et (b),
ayant une teneur en ces copolymères de 0,5 à 70% en poids, par rapport à la quantité totale de solution ou de dispersion.

2. Solutions aqueuses de copolymère ou dispersions aqueuses de copolymère selon la revendication 1, dans lesquels les groupements anhydride des copolymères peuvent être partiellement ou totalement solvolysés par des composés à fonction hydroxy ou des amines, et les groupements carboxyle présents ou obtenus lors de la solvolyse peuvent être partiellement ou totalement neutralisés.

3. Solutions aqueuses de copolymères ou dispersions aqueuses de copolymères selon la revendication 1 ou 2, contenant en plus des émulsifiants en une quantité allant jusqu'à 40% en poids, par rapport à la quantité totale en copolymère.

4. Solutions aqueuses de copolymères ou dispersions aqueuses de copolymères selon la revendication 1 ou 2, contenant en plus des colloïdes protecteurs en une quantité allant jusqu'à 40% en poids, par rapport à la quantité totale en copolymère.

5. Utilisation de solutions aqueuses de copolymères ou de dispersions aqueuses de copolymères selon l'une quelconque des revendications 1 à 4 pour l'ennoblissement des cuirs et des peaux.

6. Utilisation de solutions aqueuses de copolymères ou de dispersions aqueuses de copolymères selon l'une quelconque des revendications 1 à 4 en tant qu'agent dispersant pour des pigments inorganiques ou organiques.

7. Copolymères, pouvant être obtenus par copolymérisation de
(a') 20 à 90% en moles d'au moins un acide dicarboxylique en C₄-C₁₂, à insaturation monoéthylénique ou son anhydride, avec
(b') 5 à 80% en moles d'au moins un oligomère ramifié d'une 1-oléfine linéaire, où la 1-oléfine linéaire est constituée d'au moins 4 atomes de carbone, et l'oligomère porte un groupement réactif vinyle ou vinylidène, et
(c') 5 à 50% en moles d'au moins un autre composé à insaturation monoéthylénique, pouvant être copolymérisé avec les monomères (a') et (b').

8. Copolymères, pouvant être obtenus par copolymérisation de
(a) 20 à 95% en moles d'au moins un acide dicarboxylique en C₄-C₁₂, à insaturation monoéthylénique ou son anhydride, avec
(b") 5 à 80% en moles d'au moins un oligomère ramifié d'une 1-oléfine linéaire, où la 1-oléfine linéaire est constituée d'au moins 7 atomes de carbone, et l'oligomère porte un groupement réactif vinyle ou vinylidène, et
(c) 0 à 50% en moles d'au moins un autre composé à insaturation monoéthylénique, pouvant être copolymérisé avec les monomères (a) et (b").
